(19) Europäisches Patentamt
European Patent Office
Office européen des brevets

(11) **EP 2 921 714 A1**

(12) **EUROPÄISCHE PATENTANMELDUNG**

(43) Veröffentlichungstag:
**23.09.2015 Patentblatt 2015/39**

(21) Anmeldenummer: **15157763.2**

(22) Anmeldetag: **05.03.2015**

(51) Int Cl.:
*F04D 29/54* *(2006.01)*    *F01D 5/14* *(2006.01)*
*F01D 9/04* *(2006.01)*    *F01D 25/24* *(2006.01)*
*F04D 29/64* *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **20.03.2014 DE 102014205235**

(71) Anmelder: **Rolls-Royce Deutschland Ltd & Co KG 15827 Blankenfelde-Mahlow (DE)**

(72) Erfinder: **Gümmer, Volker 15831 Mahlow (DE)**

(74) Vertreter: **Maikowski & Ninnemann Postfach 15 09 20 10671 Berlin (DE)**

(54) **SCHAUFELREIHENGRUPPE**

(57)    Die Erfindung betrifft eine Schaufelreihengruppe, die in einem Hauptströmungspfad einer Strömungsmaschine anordbar ist und aus N benachbarten und sowohl in Axialrichtung (x) als auch in Umfangsrichtung relativ zueinander fest angeordneten Mitgliedsschaufelreihen besteht. Dabei sind in der durch die Axialrichtung (x) und die Radialrichtung (r) gebildeten Meridionalebene eine vordere Mitgliedsschaufelreihe mit vorderen Schaufeln (i) sowie eine hintere Mitgliedsschaufelreihe mit hinteren Schaufeln (i+1) gegeben. Die Schaufelreihengruppe weist zwei Hauptströmungspfadberandungen (HB) aufweist. Es ist vorgesehen, dass die Schaufeln (i, i+1) der Mitgliedsschaufelreihen an der einen Hauptströmungspfadberandung in der umgebenden Struktur mittels einer Schaufelfußkonstruktion fixiert sind und dass die Schaufeln (i, i+1) der Mitgliedschaufelreihen an der anderen Hauptströmungspfadberandung (HB) jeweils mit einer Basis ((F(i), F(i+1)) fest verbunden sind, wobei eine vordere Basis (F(i) einer Schaufel (i) einer vorderen Mitgliedschaufelreihe und eine dazu benachbarte hintere Basis (F(i+1) einer Schaufel (i+1) einer hinteren Mitgliedschaufelreihe Bestandteil einer in eine Kavität (K) eingebetteten Deckbandkonstruktion (DS) sind. Ein weiterer Bestandteil der Deckbandkonstruktion (DS) ist ein Träger (IT), der mit mindestens einer dieser Basen ((F(i), F(i+1)) mit Hilfe einer formschlüssigen oder werkstoffbasierten Verbindung verbunden oder einstückig mit diesen ausgebildet ist, wobei der Träger (IT) eine dem Hauptströmungspfad abgewandte Oberfläche aufweist, die geeignet ist, einer angrenzenden Oberfläche einer Strömungsmaschine gegenüberzustehen..

**Fig. 2a**

EP 2 921 714 A1

**Beschreibung**

Die Erfindung betrifft eine Schaufelreihengruppe gemäß dem Oberbegriff des Anspruchs 1. Insbesondere betrifft die Erfindung eine Stator-Schaufelreihengruppe.

Die aerodynamische Belastbarkeit und die Effizienz von Strömungsmaschinen, insbesondere Bläsern, Verdichtern, Turbinen, Pumpen und Ventilatoren, wird durch das Wachstum und die Ablösung von Grenzschichten in der Nähe und auf den Naben- und Gehäusewänden begrenzt. Stand der Technik in Strömungsmaschinen sind Anordnungen mit doppelreihigen Leiträdern, üblicherweise eingesetzt als Austrittsleitrad in Verdichtern, oder auch doppelreihige Rotoranordnungen, bei denen die Rotoren direkt benachbart gegenläufig operieren oder bei denen zwei direkt benachbarte Rotorschaufelreihen auf einer gemeinsamen Trommel befestigt sind. Eine derartige Strömungsmaschine ist beispielsweise aus der EP 2 261 463 A2 bekannt.

In jedem Fall ergibt sich in Schaufelgruppenanordnungen wegen der beabsichtigten axial engen Beabstandung der Mitgliedschaufelreihen die Problematik, dass die Fixierung der beteiligten Schaufeln an der Nabe und im Gehäuse konstruktiv schwer zu realisieren ist, so dass neuartige Lösungen erforderlich sind, um eine kompakte Bauweise der Maschine zu erreichen. Dies gilt insbesondere für Statorschaufelreihengruppen.

Der vorliegenden Erfindung liegt die Aufgabe zu Grunde, eine Schaufelreihengruppe bereitzustellen, die eine konstruktiv kompakte Realisierung der Fixierung der Schaufeln der Schaufelreihengruppe an den Hauptströmungspfadberandungen ermöglicht.

Diese Aufgabe wird erfindungsgemäß durch eine Schaufelreihengruppe mit den Merkmalen des Anspruchs 1 gelöst. Ausgestaltungen der Erfindung sind in den Unteransprüchen angegeben.

Danach stellt die erfindungsgemäße Lösung eine Schaufelreihengruppe bereit, die in einem Hauptströmungspfad einer Strömungsmaschine anordbar ist und aus N benachbarten und sowohl in Axialrichtung als auch in Umfangsrichtung relativ zueinander fest angeordneten Mitgliedsschaufelreihen besteht. Dabei sind eine vordere Mitgliedsschaufelreihe mit vorderen Schaufeln mit Vorderkante und Hinterkante sowie eine hintere Mitgliedsschaufelreihe mit hinteren Schaufeln mit Vorderkante und Hinterkante gegeben und weist die Schaufelreihengruppe zwei Hauptströmungspfadberandungen auf.

Es ist erfindungsgemäß vorgesehen, dass die Schaufeln der Mitgliedsschaufelreihen an der einen Hauptströmungspfadberandung in der umgebenden Struktur mittels einer Schaufelfußkonstruktion fixiert sind und dass die Schaufeln der Mitgliedschaufelreihen an der anderen Hauptströmungspfadberandung jeweils mit einer Basis fest verbunden sind, wobei eine vordere Basis einer Schaufel einer vorderen Mitgliedschaufelreihe und eine dazu benachbarte hintere Basis einer Schaufel einer hinteren Mitgliedschaufelreihe Bestandteil einer in eine Kavität eingebetteten Deckbandkonstruktion sind. Ein weiterer Bestandteil der Deckbandkonstruktion ist ein Träger, der mit mindestens einer dieser Basen mit Hilfe einer formschlüssigen oder werkstoffbasierten Verbindung verbunden oder einstückig mit diesen ausgebildet ist, wobei der Träger eine dem Hauptströmungspfad abgewandte Oberfläche aufweist, die geeignet ist, einer angrenzenden Oberfläche einer Strömungsmaschine gegenüberzustehen.

Die Erfindung stellt eine baulich kompakte Schaufelreihengruppe mit einer Deckbandkonstruktion zur Verfügung, die einen Träger aufweist, der zum einen mit mindestens einer der Basen zweier benachbarter Schaufeln einer vorderen und hinteren Mitgliedschaufelreihe verbunden ist. Hierdurch wird eine Verbindung der beiden Basen bereitgestellt und/oder gesichert und/oder der Träger in der Deckbandkonstruktion gehalten. Zum anderen besitzt der Träger eine vom Hauptströmungspfad abgewandte Oberfläche, die einer angrenzenden Oberfläche der Strömungsmaschine gegenübersteht. Dieser Oberfläche kann insbesondere dazu dienen, durch seine Beschaffenheit oder durch einen applizierten Anstreifbelag oder eine applizierte Dichtspitzenanordnung eine Kavität, in der sich die Deckbandkonstruktion befindet, gegen Leckageströme abzudichten.

Bei einer Statorschaufelreihengruppe ist die Deckbandkonstruktion in einer Kavität an der inneren Hauptströmungspfadberandung angeordnet. Der Träger ist für diesen Fall ein Innenträger, dessen vom Hauptströmungspfad abgewandte Oberfläche der rotierenden Oberfläche der Rotorwelle der Strömungsmaschine gegenübersteht.

Es kann vorgesehen sein, dass die Basen zweier benachbarter Mitgliedschaufelreihen an der Hauptströmungspfadberandung eine im gesamten Bereich der Mitgliedschaufelreihen geschlossene und vom Hauptfluidstrom benetzte Oberfläche bilden.

Die Basis einer Mitgliedschaufelreihe kann in Umfangsrichtung im Bereich einer Schaufel als einzelner Schaufelfuß ausgebildet sein, oder in Umfangsrichtung im Bereich mehrerer Schaufeln ein Ringsegment bilden oder am gesamten Umfang als Vollring ausgebildet sein.

Für die Basen kann eine integrale Bauweise oder eine modulare Bauweise vorgesehen sein, wobei die integrale Bauweise eine strukturelle Verbindung der Basen benachbarter Mitgliedschaufelreihen vorsieht, gegeben durch eine Löt- oder Schweißverbindung oder eine einteilige Fertigung, und die modulare Bauweise einen Zusammenbau der Basen benachbarter Mitgliedschaufelreihen vorsieht.

Eine Ausgestaltung der Erfindung sieht eine modulare Bauweise der Basen vor, wobei der Träger mit den Basen der vorderen und hinteren Mitgliedschaufelreihen verbunden ist und dabei die Verbindung der beiden Basen sichert. Dabei weist der Träger jeweils eine in der Basis der Mitgliedschaufelreihen verankerte Haltestruktur auf, nämlich eine vordere Haltestruktur verankert in der Basis der vorderen Mitgliedschaufelreihe und eine hintere Haltestruktur verankert in der Basis der hinteren Mitgliedschaufelreihe. Jeder der Haltestrukturen fixiert aufgrund ihrer Formgebung den Träger in der Mitgliedschaufelreihe in wenigstens einer Richtung.

Dabei kann vorgesehen sein, dass jede Haltestruktur in eine Ausnehmung in der jeweiligen Basis eingreift, wobei die Ausnehmung an der Basis der vorderen Mitgliedschaufelreihe an der stromaufwärts gewandten Seite der Basis und die Ausnehmung an Basis der hinteren Mitgliedschaufelreihe an der stromabwärts gewandten Seite der Basis vorgesehen ist. Weiter kann vorgesehen sein, dass die beiden Haltestrukturen aufeinander zu weisen und auf diese Weise die Basen der Mitgliedschaufelreihen in Axialrichtung zusammenhalten. Auch kann vorgesehen sein, dass bezogen auf die Axialrichtung die vordere Haltestruktur im Bereich nahe der Schaufelvorderkante der vorderen Mitgliedschaufelreihe und die hintere Haltestruktur im Bereich nahe der Schaufelhinterkante der hinteren Mitgliedschaufelreihe vorgesehen ist.

Eine Ausgestaltung der Erfindung sieht vor, dass die stromabwärts gewandte Seite der Basis der vorderen Mitgliedschaufelreihe und die stromaufwärts gewandte Seite der Basis der hinteren Mitgliedschaufelreihe entlang einer absatzlosen Kontaktfläche aneinander liegen.

Eine weitere Ausgestaltung der Erfindung sieht vor, dass an der Basis der vorderen Mitgliedschaufelreihe eine Haltestruktur vorgesehen ist, die im Wesentlichen stromaufwärts gerichtet und axial stromab der Schaufelvorderkante der vorderen Mitgliedschaufelreihe vorgesehen ist, und an der Basis der hinteren Mitgliedschaufelreihe eine Haltestruktur vorgesehen ist, die im Wesentlichen stromabwärts gerichtet und axial stromauf der Schaufelhinterkante der hinteren Mitgliedschaufelreihe vorgesehen ist. Dabei sind die Haltestrukturen in jeweils einer Ausnehmung im Träger verankert, wobei durch die Formgebung der Haltestrukturen und Ausnehmungen der Träger sowohl in der vorderen als auch in der hinteren Mitgliedschaufelreihe in wenigstens einer Richtung fixiert ist.

Dabei kann vorgesehen sein, dass in einer Meridionalebene der Träger gemeinsam mit jeweils einer Basis der beiden Mitgliedschaufelreihen einen Hohlraum innerhalb der Deckbandkonstruktion bildet. Weiter kann vorgesehen sein, dass wenigstens einer der zwei Hohlräume im Wesentlichen geschlossen ausgebildet und von einer der Basen und dem Träger umgeben ist.

Eine weitere Ausgestaltung der Erfindung sieht vor, dass die stromabwärts gewandte Seite der Basis der vorderen Mitgliedschaufelreihe und die stromaufwärts gewandte Seite der Basis der hinteren Mitgliedschaufelreihe aneinander liegen und an einer Kontaktfläche im Bereich der inneren Hauptströmungspfadberandung mit Hilfe eines Schweiß- oder Lötverfahrens verbunden sind.

Dabei kann vorgesehen sein, dass der Träger gemeinsam von den Basen der vorderen und hinteren Mitgliedschaufelreihen gehalten wird, wobei an der Basis der vorderen Mitgliedschaufelreihe eine Haltestruktur ausgebildet ist, die im Wesentlichen stromabwärts gerichtet ist und in Axialrichtung betrachtet im Bereich nahe der Schaufelvorderkante der vorderen Mitgliedschaufelreihe vorgesehen ist, wobei an der Basis der hinteren Mitgliedschaufelreihe eine Haltestruktur ausgebildet ist, die im Wesentlichen stromaufwärts gerichtet ist und in Axialrichtung betrachtet im Bereich nahe der Schaufelhinterkante der hinteren Mitgliedschaufelreihe vorgesehen ist, wobei die Haltefinger jeweils in einer Ausnehmung im Träger verankert sind, und wobei der Träger jeweils an der Basis der Mitgliedschaufelreihen in wenigstens einer Richtung fixiert ist.

Eine Ausgestaltung der Erfindung sieht vor, dass die Haltestrukturen und Ausnehmungen in einer Meridionalebene x, r eine der Formen a.) im Wesentlichen rechtwinklig, b.) im Wesentlichen halbschwalbenschwanzartig, c.) im Wesentlichen schwalbenschwanzartig, d.) im Wesentlichen dreieckig, oder e.) im Wesentlichen keilartig aufweisen.

Eine weitere Ausgestaltung der Erfindung sieht vor, dass wenigstens an einer der beiden Mitgliedschaufelreihen die Schaufelprofile der jeweiligen Schaufeln separat von der Basis angefertigt sind und mit Hilfe von laschenartigen Fortsätzen, die im Wesentlichen als Verlängerung des Schaufelprofils über die Hauptströmungspfadberandungen hinaus und in die Basis hinein reichen, an der Basis befestigt sind.

Gemäß einer Ausführungsvariante der Erfindung ist vorgesehen, dass die Deckbandkonstruktion, die gemeinsam durch die Basen der Mitgliedschaufelreihen und den Träger gebildet ist, in einer Meridionalebene einen im Wesentlichen rechteckigen Außenumriss aufweist.

Eine weitere Ausführungsform sieht vor, dass in einer durch die Meridionalkoordinate und die Umfangskoordinate gebildeten Ebene an der inneren Hauptströmungspfadberandung die Basis der Schaufeln beider Mitgliedschaufelreihen durch einzelne Schaufelfüße rechteckigen Grundrisses gebildet werden.

Eine weitere Ausgestaltung sieht vor, dass in einer durch die Meridionalkoordinate und die Umfangskoordinate gebildeten Ebene an der inneren Hauptströmungspfadberandung die Basis der Schaufeln wenigstens einer der Mitgliedschaufelreihen durch einzelne Schaufelfüße parallelogrammförmigen Grundrisses gebildet werden. Dabei kann vorgesehen sein, dass die Basen der Schaufeln beiden Mitgliedschaufelreihen durch einzelne Schaufelfüße parallelogrammförmigen Grundrisses gebildet werden, wobei die vorderen Ecken der Basis der hinteren Mitgliedschaufelreihe unmittelbar an den hinteren Ecken der Basis der vorderen Mitgliedschaufelreihe vorgesehen sind und die seitlichen Kanten der Basen der beiden Mitgliedschaufelreihen einen geraden oder abgewinkelten Linienzug bilden.

Gemäß einer Ausführungsform der vorliegenden Erfindung ist vorgesehen, dass die hauptströmungsabgewandten Kanten der Basen der vorderen Mitgliedschaufelreihe gemeinsam mit den hauptströmungszugewandten Kanten der Basen der hinteren Mitgliedschaufelreihe jeweils in Umfangsrichtung konstant, aber von Schaufel zu Schaufel alternierend axial versetzt vorgesehen sind, um eine feste relative Position zwischen den Schaufeln der beiden Mitgliedschaufelreihen sicherzustellen.

Gemäß einer weiteren Ausführungsform der Erfindung ist vorgesehen, dass die hauptströmungsabgewandten Kanten der Basen der vorderen Mitgliedschaufelreihe gemeinsam mit den hauptströmungszugewandten Kanten der Basen der hinteren Mitgliedschaufelreihe jeweils schräg gegenüber der Umfangsrichtung verlaufen, um eine feste relative Position zwischen den Schaufeln der beiden Mitgliedschaufelreihen sicherzustellen.

Eine weitere Ausgestaltung der Erfindung sieht vor, dass die hauptströmungsabgewandten Kanten der Basen der vorderen Mitgliedschaufelreihe gemeinsam mit den hauptströmungszugewandten Kanten der Basen der hinteren Mitgliedschaufelreihe jeweils konturiert und mit variierender Axialposition in Umfangsrichtung verlaufen, um eine feste relative Position zwischen den Schaufeln der beiden Mitgliedschaufelreihen sicherzustellen.

Gemäß einer weiteren Ausgestaltung bildet wenigstens eine der Basen der vorderen und hinteren Mitgliedschaufelreihen mit wenigstens einem Teil des Trägers ein gemeinsames Bauteil. Dabei kann vorgesehen sein, dass die beiden Mitgliedschaufelreihen im Bereich des Trägers mittels einer Schweiß- oder Lötverbindung miteinander verbunden sind.

Eine weitere Ausgestaltung der Erfindung sieht vor, dass die Basen der benachbarten vorderen und hinteren Mitgliedschaufelreihen miteinander baulich integriert sind und eine einheitliche Gesamtbasis bilden. Dabei kann vorgesehen sein, dass die Gesamtbasis an mindestens einer Position, insbesondere an zwei Positionen mittels einer Löt- oder Schweißverbindung mit dem Träger verbunden ist. Auch kann vorgesehen sein, dass Basis in der Meridionalansicht einen im Wesentlichen U-förmigen Querschnitt und der Träger in der Meridionalansicht einen im Wesentlichen rechteckigen Querschnitt besitzt oder umgekehrt.

Gemäß einer weiteren Ausgestaltung sind die Basen der vorderen und hinteren Mitgliedschaufelreihen sowie der Träger miteinander baulich integriert und als Einheit ausgebildet. Dabei kann vorgesehen sein, dass die Basis und mindestens jeweils eine der Schaufel der beiden Mitgliedschaufelreihen und der Träger miteinander baulich integriert als Einheit vorgesehen sind. Die Herstellung einer solchen Anordnung kann beispielsweise durch ein lasergestütztes Fertigungsverfahren erfolgen, wie es durch Lasersintering, Laserprinting, Direct Laser Depositioning oder verwandte Verfahren gegeben ist.

Eine weitere Ausgestaltung der Erfindung sieht vor, dass auf der vom Hauptströmungspfad abgewandten Oberfläche des Trägers ein Anstreifbelag vorgesehen ist und dieser ebenfalls dem integralen Bauteil zugehört und dementsprechend in einem einheitlichen lasergestützten Fertigungsprozess gemeinsam mit mindestens jeweils einer Schaufel der Mitgliedsschaufelreihen und dem Innenträger hergestellt ist. Dies kann durch ein Gieß- oder Einspritzgießverfahren erfolgen.

Eine weitere Ausgestaltung der Erfindung sieht vor, dass an einer der kavitätsbegrenzenden Oberflächen des Trägers oder an einer an die Kavität angrenzenden Oberfläche der Rotorwelle ein oder mehrere Dichtspitzen, beispielsweise drei Dichtspitzen, zur Minderung von Leckageströmen durch die Kavität vorgesehen sind.

Die vorliegende Erfindung bezieht sich auf Schaufeln von Strömungsmaschinen wie Bläser, Verdichter, Pumpen, Ventilatoren und Turbinen axialer, halbaxialer und radialer Bauart mit gasförmigem oder flüssigem Arbeitsmedium. Die Strömungsmaschine kann eine oder mehrere Stufen mit jeweils einem Rotor und einem Stator umfassen, in Einzelfällen wird die Stufe lediglich durch einen Rotor gebildet. Der Rotor besteht aus einer Reihe oder aus mehreren benachbarten und eine Gruppe bildenden Reihen von Schaufeln, die mit der rotierenden Welle der Maschine verbunden sind und Energie mit dem Arbeitsmedium austauschen. Erfindungsgemäß günstig ist eine Anwendung auf Strömungsarbeitsmaschinen, bei denen der Rotor Energie an das Arbeitsmedium abgibt. Der Rotor kann mit Deckband oder mit Laufspalt am äußeren Schaufelende ausgeführt sein. Der Stator besteht aus einer Reihe oder aus mehreren benachbarten und eine Gruppe bildenden Reihen von feststehenden Schaufeln, die nabenseitig wie gehäuseseitig mit festem oder freiem Schaufelende mit Spalt ausgeführt sein können. Die Rotortrommel und die Beschaufelung sind üblicherweise von einem Gehäuse umgeben, in anderen Fällen, z. B. bei Propellern oder Schiffsschrauben, existiert kein Gehäuse. Die Maschine kann auch einen Stator vor dem ersten Rotor, ein sogenanntes Vorleitrad aufweisen. Mindestens ein Stator oder Vorleitrad kann -abweichend von der unbeweglichen Fixierung- drehbar gelagert sein, um den Anstellwinkel zu verändern. Eine Verstellung erfolgt beispielsweise durch eine von außerhalb des Ringkanals zugängliche Spindel. Alternativ kann die besagte Strömungsmaschine bei Mehrstufigkeit zwei gegenläufige Wellen besitzen, so daß die Rotorschaufelreihen von Stufe zu Stufe die Drehrichtung wechseln. Hierbei existieren keine Statoren zwischen aufeinander folgenden Rotoren. Schließlich kann die Strömungsmaschine alternativ eine Nebenstromkonfiguration derart aufweisen, daß sich der einstromige Ringkanal hinter einer bestimmten Schaufelreihe in zwei konzentrische Ringkanäle aufteilt, die ihrerseits mindestens jeweils eine weitere Schaufelreihe beherbergen.

Die Erfindung wird nachfolgend unter Bezugnahme auf die Figuren der Zeichnung anhand mehrerer Ausführungsbeispiele näher erläutert. Es zeigen:

Fig. 1: eine Konstruktion eines Strömungskanals einer Strömungsmaschine nach dem Stand der Technik,

Fig. 2a: eine erfindungsgemäße Statorbaugruppe mit Fronteingriff am Schaufelfuß,

Fig. 2b: eine erfindungsgemäße Anordnung zweier Mitgliedschaufelreihen (Umfangsbetrachtung im Schnitt A-A aus Fig.2a),

Fig. 2c: eine erfindungsgemäße Anordnung zweier Mitgliedschaufelreihen (Umfangsbetrachtung im Schnitt A-A aus Fig.2a),

Fig. 2d: eine erfindungsgemäße Anordnung zweier Mitgliedschaufelreihen (Umfangsbetrachtung im Schnitt A-A aus Fig.2a),

Fig. 2e: eine erfindungsgemäße Anordnung zweier Mitgliedschaufelreihen (Umfangsbetrachtung im Schnitt A-A aus Fig.2a),

Fig. 2f: eine erfindungsgemäße Anordnung zweier Mitgliedschaufelreihen (Umfangsbetrachtung im Schnitt A-A aus Fig.2a),

Fig. 3: eine weitere erfindungsgemäße Statorbaugruppe mit Sattelbasis,

Fig. 4: eine weitere erfindungsgemäße Statorbaugruppe mit Rücken-an-Rücken-Haltefinger,

Fig. 5: eine weitere erfindungsgemäße Statorbaugruppe mit Rücken-an-Rücken-Haltefinger,

Fig. 6: eine weitere erfindungsgemäße Statorbaugruppe mit Schweiß-/Lötverbindung,

Fig. 7: eine weitere erfindungsgemäße Statorbaugruppe mit Schweiß-/Lötverbindung,

Fig. 8: eine weitere erfindungsgemäße Statorbaugruppe mit Schweiß-/Lötverbindung,

Fig. 9: eine weitere erfindungsgemäße Statorbaugruppe mit Schweiß-/Lötverbindung,

Fig. 10: eine weitere erfindungsgemäße Statorbaugruppe mit Integralbauweise, und

Fig. 11: eine weitere erfindungsgemäße Statorbaugruppe mit Integralbauweise.

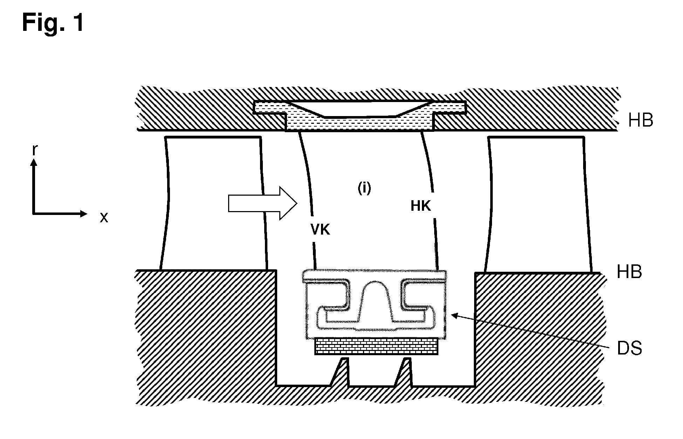

Die Fig. 1 zeigt in der durch die Axialrichtung x und die Radialrichtung r gebildeten Meridionalebene den Abschnitt einer Strömungsmaschine mit einer Statorschaufelreihe mit Schaufeln (i) nach dem Stand der Technik. Die Statorschaufelreihe ist in einem Hauptströmungspfad der Strömungsmaschine angeordnet, der von zwei Hauptströmungspfadberandungen HB begrenzt wird. Die Schaufeln (i) sind an einem Schaufelende in einer die eine Hauptströmungspfadberandung HB bildenden Struktur mittels eines Schaufelfußes gehalten. Das andere Schaufelende ist mit einer Deckbandkonstruktion DS verbunden. Weitere Statorreihen der Strömungsmaschine sind mit einiger Entfernung voneinander ähnlich befestigt. Die Strömung erfolgt hier wie eingezeichnet von links nach rechts und passiert entsprechend zunächst die Schaufelvorderkante VK und dann die Schaufelhinterkante HK der Schaufeln (i).

Eine besondere, vom Stand der Technik abweichende bauliche Anforderung kommt hinzu, wenn Mitgliedschaufelreihen einer Schaufelreihengruppe möglichst eng in Strömungsrichtung der Maschine hintereinander angeordnet werden sollen, so beispielsweise in einer Statorschaufelreihengruppe, welche aus mindestens zwei gleichartigen und ihre relative Anordnung zueinander (sowohl in Umfangsrichtung als auch in Meridionalrichtung) nicht ändernden direkt benachbarten Mitgliedsschaufelreihen mit Deckbandkonstrultion besteht.

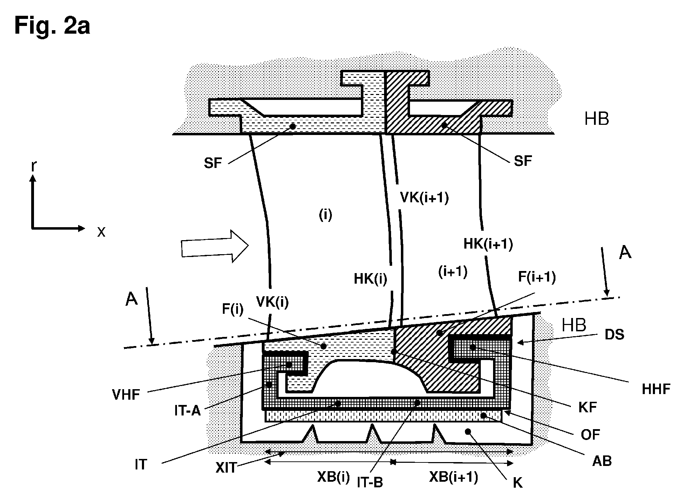

Die Fig. 2a zeigt in einer durch die Axialrichtung x und die Radialrichtung r gebildeten Meridionalebene eine erfindungsgemäße Statorschaufelreihengruppe bestehend aus zwei direkt benachbarten Statorschaufelreihen (i) und (i+1).

Die Vorder- und Hinterkanten der Schaufeln der vorderen Reihe (i) sind mit VK(i) und HK(i) gekennzeichnet, die Vorder- und Hinterkanten der Schaufeln der hinteren Reihe (i+1) sind mit VK(i+1) und HK(i+1) gekennzeichnet.

Es wird darauf hingewiesen, dass zu Zwecken einer übersichtlichen Darstellung in der Fig. 2a und auch den anderen Figuren zwischen der Bezeichnung der Mitgliedsschaufelreihen (i) und (i+1) und der Bezeichnung der einzelnen Mitglieder bzw. Schaufeln der Mitgliedsschaufelreihen nicht unterschieden wird, d.h. die Mitglieder bzw. Schaufeln der Schaufelreihen sind ebenfalls mit (i) und (i+1) bezeichnet.

Das Schaufelprofil stellt den aerodynamisch relevanten Bestandteil einer Schaufel dar, der von Gas umströmt wird (anders als z.B. ein Schaufelfuß). Auch zwischen der Bezeichnung des Schaufelprofils und der Bezeichnung der jeweiligen Schaufel wird in den Figuren zu Zwecken einer übersichtlichen Darstellung nicht unterschieden.

Ebenfalls erfindungsgemäß ist eine Konfiguration aus mehr als zwei Mitgliedschaufelreihen, beispielsweise drei Mitgliedschaufelreihen. Die zwei dargestellten Mitgliedschaufelreihen können erfindungsgemäß also gleichermaßen zwei Mitgliedschaufelreihen aus einem Verband von drei oder mehr Mitgliedschaufelreihen bilden.

Die beiden dargestellten Schaufelreihenmitglieder (i) und (i+1) besitzen an beiden Schaufelenden eine feste Verbindung zu der die Hauptströmungspfadberandung bildenden Struktur. Die radial äußeren Enden der Schaufelreihenmitglieder (i) und (i+1) sind dabei an der äußeren Hauptströmungspfadberandung HB jeweils mittels einer Schaufelfußkonstruktion SF in der umgebenden Struktur fixiert. Die Schaufelfußkonstruktion SF kann dabei einen einzelnen Schaufelfuß oder ein über mehrere Schaufeln einer Statorschaufelreihe gehendes Schaufelfuß-Ringsegment oder einen über alle Schaufeln einer Statorschaufelreihe gehenden Schaufelfuß-Vollring aufweisen. Im Kontext der vorliegenden Erfindung kommt es auf die genaue Art der Schaufelfußkonstruktion nicht an. Der Fokus der vorliegenden Erfindung liegt auf der Fixierung der radial inneren Enden der Schaufelreihenmitglieder (i) und (i+1) in einer Deckbandkonstruktion DS, die nachfolgend erläutert wird.

Im Bereich des inneren festen Schaufelendes sind die den Mitgliedschaufelreihen zugehörigen Schaufelprofile auf einer Basis F(i), F(i+1) vorgesehen, wobei die Basis F(i), F(i+1) einem einzelnen Schaufelfuß, einem in Umfangsrichtung über mehrere Schaufeln gehenden Ringsegment oder einem in Umfangsrichtung geschlossenen Vollring zugehörig ist. Die Basen F(i), F(i+1) zweier benachbarter Mitgliedschaufelreihen (i) und (i+1) bilden an der Hauptströmungspfadberandung HB eine im gesamten Bereich der Mitgliedschaufelreihen (i) und (i+1) geschlossene und vom Hauptfluidstrom benetzte Oberfläche, wobei für die Basen eine der Bauweisen, integrale Bauweise und modulare Bauweise, vorgesehen ist, wobei die integrale Bauweise eine strukturelle Verbindung der Basen (i) und (i+1) vorsieht, gegeben durch eine Löt- oder Schweißverbindung oder eine einteilige Fertigung, und die modulare Bauweise einen Zusammenbau der Basen (i) und (i+1) vorsieht.

Die Fig. 2a zeigt das Beispiel einer modularen Bauweise. In wenigstens einer durch die Axialrichtung x und die Radialrichtung r gebildeten Meridionalebene grenzen die Basen F(i), F(i+1) zweier benachbarter Mitgliedschaufelreihen (i) und (i+1) in wenigstens einem Punkt an der Hauptströmungspfadberandung aneinander. Günstig ist dabei auch ein Kontakt zweier benachbarter Mitgliedschaufelreihen (i) und (i+1) entlang einer von der Hauptströmungspfadberandung ausgehenden, schräg oder quer zur Hauptströmungsrichtung orientierten Linie.

Es kann vorgesehen sein, dass die Basen F(i), F(i+1) zweier benachbarter Mitgliedschaufelreihen (i) und (i+1) nicht nur in einer Meridionalebene (r, x), sondern entlang wenigstens eines Abschnittes des Umfangs der Strömungsmaschine aneinandergrenzen.

Die Basis F(i) der Schaufeln (i) der vorderen Mitgliedschaufelreihe und die Basis F(i+1) der Schaufeln (i+1) der hinteren Mitgliedschaufelreihe sind die dem Hauptströmungspfad am nächsten liegenden Bestandteile einer Deckbandkonstruktion DS. Die Deckbandkonstruktion DS ist in einer Kavität K in der Nabe der Maschine eingebettet und besitzt als weiteres Element einen Innenträger IT. Der Innenträger IT bildet eine dem Hauptströmungspfad der Strömungsmaschine abgewandte Oberfläche OF aus, die geeignet ist, einer angrenzenden Oberfläche einer Strömungsmaschine gegenüberzustehen. Auf der Unterseite des Innenträgers IT bzw. auf der genannten Oberfläche OF kann entweder wenigstens eine Dichtspitze und alternativ ein Anstreifbelag AB (wie hier dargestellt) vorgesehen sein.

Der Innenträger IT kann ein in Umfangsrichtung über eine oder mehrere Schaufeln gehendes Ringsegment oder einen in Umfangsrichtung geschlossenen Vollring bilden.

Im Folgenden werden unter anderem Haltestrukturen beschrieben, die die Basen F(i), F(i+1) einerseits und den Innenträger IT andererseits miteinander verbinden. Diese Haltestrukturen können zumindest im Meridionalebenenschnitt eine längliche Form aufweisen und insbesondere durch einen Haltefinger gebildet sein. Dabei kann vorgesehen sein, dass eine Haltestruktur jeweils mit einer Basis oder mit dem Innenträger einteilig ausgebildet ist. Im Folgenden werden solche Haltestrukturen beispielhaft anhand eines zumindest im Meridionalebenenschnitt länglich ausgebildeten (geraden oder gebogenen) Haltefingers beschrieben. Diese Beschreibung steht beispielhaft für alternative Ausgestaltungen, in denen die Haltestruktur in anderer Weise ausgebildet ist, beispielsweise als kurzer Fixierungsstummel.

Die Deckbandkonstruktion DS wird in der Fig. 2a durch die Basen F(i), F(i+1) der beiden Mitgliedschaufelreihen und den Innenträger IT gebildet. Die hauptströmungsabgewandte Seite Basis F(i) der vorderen Reihe (i) und die hauptströmungszugewandte Seite der Basis F(i+1) der hinteren Reihe (i+1) liegen entlang einer ebenen absatzlosen Kontaktfläche KF aneinander. Der Innenträger IT wird gemeinsam von den Basen F(i), F(i+1) der Reihen (i) und (i+1) gehalten und sichert gleichzeitig den Zusammenhalt der beiden Basen F(i), F(i+1) entlang der Kontaktfläche KF.

Der Innenträger IT besitzt in der dargestellten Ausführungsform jeweils einen in der Basis F(i), F(i+1) der Reihe (i) bzw. (i+1) verankerten Haltefinger, nämlich einen vorderen Haltefinger VHF verankert in der Basis der vorderen Reihe (i) und einen hinteren Haltefinger HHF verankert in der Basis der hinteren Reihe (i+1). Dabei fixiert jeder der Haltefinger aufgrund seiner Formgebung den Innenträger IT sowohl in der Mitgliedschaufelreihe (i) als auch in der Mitgliedschaufelreihe (i+1) in wenigstens einer Richtung, wobei jeder Haltefinger VHF, HHF in eine Ausnehmung in der jeweiligen Basis F(i), F(i+1) eingreift.

Die Ausnehmung in der Basis F(i) der vorderen Reihe (i) ist bezogen auf die axiale Richtung x an der hauptströmungszugewandten Seite der Basis F(i) vorgesehen, die Ausnehmung in der Basis F(i+1) in der hinteren Reihe (i+1) ist an der hauptströmungsabgewandten Seite der Basis F(i+1) vorgesehen. Die Haltefinger VHF, HHF und zugehörigen Ausnehmungen können im Wesentlichen rechtwinklig (wie hier dargestellt) oder alternativ auch im Wesentlichen halbschwalbenschwanzartig oder schwalbenschwanzartig oder dreieckig oder keilfartig geformt sein.

Es kann vorgesehen sein, dass, wie in der Fig. 2a dargestellt, die beiden Haltefinger VHF, HHF zueinander weisen und auf diese Weise die Basen F(i), F(i+1) der Mitgliedschaufelreihen (i) und (i+1) in Axialrichtung zusammenhalten. Günstig ist es, wenn die Basen F(i), F(i+1) gemeinsam von einem Innenträger IT mit einem in etwa klammerförmigen Querschnitt von unten umfasst werden. Dabei weist der Innenträger IT im Meridionalebenenschnitt eine längliche und sich in axialer Richtung erstreckende Basis IT-B auf, von deren beiden Enden sich jeweils ein Arm IT-A in radialer Richtung in Richtung des Hauptströmungspfades erstrecken, wobei von diesen Armen IT-A die Haltefinger VHF, HHF rechtwinklig abstehen.

In der hier dargestellten erfindungsgemäßen Variante ist, bezogen auf die Hauptströmungsrichtung oder die Axialrichtung, der vordere Haltefinger VHF im Bereich nahe der Vorderkante VK(i) und der hintere Haltefinger HHF im Bereich nahe der Hinterkante HK(i+1) vorgesehen.

In der hier gezeigten Variante erstreckt sich der Innenträger IT in Hauptströmungsrichtung betrachtet im Bereich beider Basen F(i), F(i+1) der Mitgliedschaufelreihen (i) und (i+1), und somit entlang einer in dieser axialer Richtung weiten Strecke. Dabei ist vorgesehen, dass bei Betrachtung in der Meridionalebene zwei orthogonal zur Axialrichtung von vorne und hinten an den Innenträger IT angelegte Tangenten einen Abstand XIT haben, und zwei orthogonal zur Axialrichtung von vorne und hinten an die Basis F(i) der Reihe (i) angelegte Tangenten einen Abstand XB(i) haben, und zwei orthogonal zur Axialrichtung von vorne und hinten an die Basis F(i+1) der Reihe (i+1) angelegte Tangenten einen Abstand XB(i+1) haben, und für die Abstände XIT, XB(i) und XB(i+1) gilt:

$$0{,}75 < \text{XIT} / (\text{XB(i)} + \text{XB(i+1)}) < 1{,}1.$$

Es kann vorgesehen sein, dass in der Nähe der Unterseite des Innenträgers mindestens drei Dichtspitzen zur Minderung von Leckageströmen durch die Kavität vorgesehen sind. Von Vorteil können vier oder mehr Dichtspitzen sein. Günstig kann des Weiteren eine Anordnung der Dichtspitzen an der Rotorwelle und gegenüberliegend der radial einwärts weisenden Oberfläche des Innenträgers IT sein. Dabei kann es sich, wie hier dargestellt, um eine gerade Anordnung oder, wie hier nicht dargestellt, um eine abgestufte Anordnung von Dichtspitzen handeln. Vorteilhaft kann auch ein im Wesentlichen rechteckiger gemeinsamer Außenumriss der beiden Basen F(i), F(i+1) und des Innenträgers IT sein.

Für eine detaillierte Betrachtung der erfindungsgemäßen Geometrie zeigt die Fig. 2a einen Schnitt A-A, mit dessen Hilfe im Weiteren die Schaufelanordnung genauer beschrieben werden kann. Der Schnitt A-A verläuft entlang einer Meridionalstromlinie in einem kleinen Abstand von der inneren Hauptströmungspfadberandung HB.

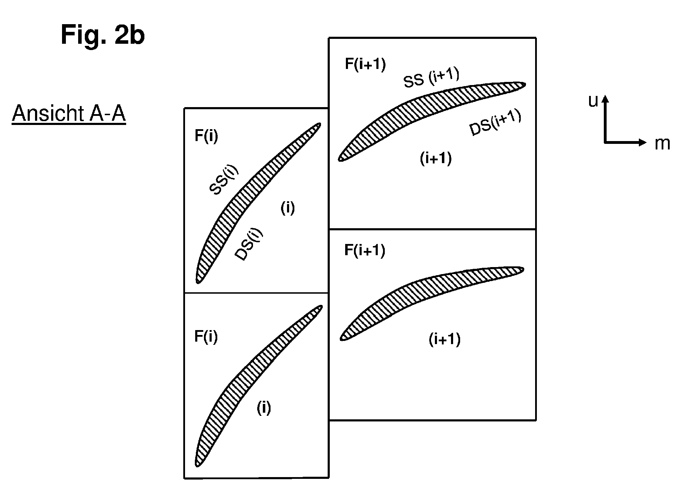

Die Fig. 2b zeigt die erfindungsgemäße Statorschaufelreihenanordnung im Schnitt A-A aus der Fig. 2a, folglich in einer durch die Meridionalkoordinate m und die Umfangskoordinate u gebildeten Ebene. Die Basis F(i), F(i+1) der Schaufeln wird in der hier gewählten Darstellung durch einzelne Schaufelfüße gebildet. Die im Wesentlichen konvexen Saugseiten der Schaufeln der Reihen (i) und (i+1) sind mit SS und die im Wesentlichen konkaven Druckseiten mit DS gekennzeichnet.

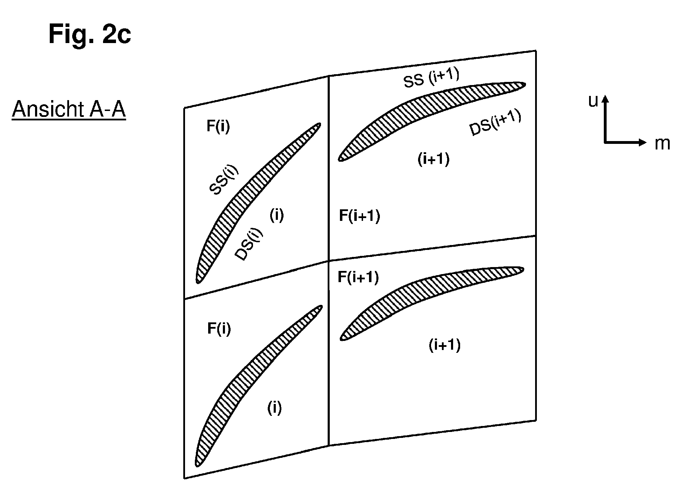

Auch in Fig. 2c wird die Basis F(i), F(i+1) der Schaufeln beiden Reihen (i) und (i+1) durch einzelne Schaufelfüße gebildet, wobei hier die Basen F(i), F(i+1) der Schaufelreihen (i) und (i+1) einen parallelogrammartigen Grundriss aufweisen. Dabei ist es günstig, wenn die vorderen Ecken der Basis der hinteren Reihe (i+1) unmittelbar an den hinteren Ecken der Basis der vorderen Reihe (i) angrenzen. Die seitlichen Kanten der Basen F(i), F(i+1) der Reihen (i) und (i+1) bilden dabei einen geraden oder alternativ abgewinkelten Linienzug. Im Fall einer abgewinkelten Linienzuges ist es vorteilhaft, wenn der zwischen den seitlichen Kanten und der Axialrichtung eingeschlossenen Winkel an der hinteren Reihe (i+1) kleiner ist als auf der vorderen Reihe (i).

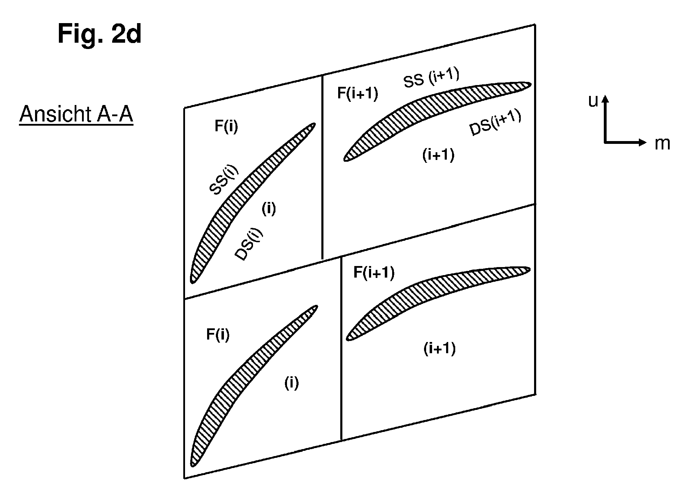

Die Fig. 2d zeigt eine erfindungsgemäße Anordnung, bei der die Basis F(i), F(i+1) der Schaufeln beider Reihen (i) und (i+1) durch einzelne Schaufelfüße gebildet ist, wobei hier die Basen F(i), F(i+1) der Schaufelreihen (i) und (i+1) einen parallelogrammartigen Grundriss aufweisen und die seitlichen Kanten der Basen der Reihen (i) und (i+1) parallel verlaufen. Es ist günstig, wenn jeweils eine seitliche Kante der vorderen Reihe (i) gemeinsam mit einer seitlichen Kante der hinteren Reihe (i+1) eine gerade Linie bildet. Es kann weiterhin von Vorteil sein, wenn die hauptströmungsabgewandten Kanten der Basen F(i) der vorderen Reihe (i) gemeinsam mit den hauptströmungszugewandten Kanten der Basen der hinteren Reihe (i+1) jeweils in Umfangsrichtung konstant, aber von Schaufel zu Schaufel alternierend axial versetzt vorgesehen sind, um eine feste relative Position zwischen den Schaufeln der vorderen Reihe (i) und der hinteren Reihe (i+1) sicherzustellen. Es ist dabei günstig, wenn jede weite Schaufel einer Reihe (i) bzw. (i+1) dieselbe Schaufelfußgeometrie besitzt.

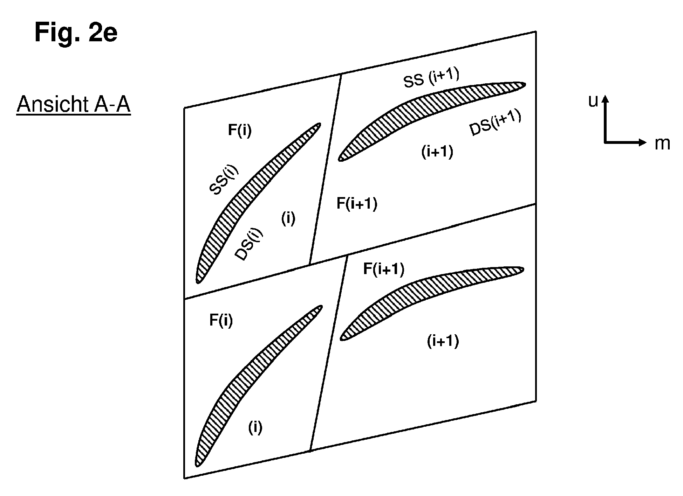

Die Fig. 2e zeigt eine erfindungsgemäße Anordnung, bei der die hauptströmungsabgewandten Kanten der Basen der vorderen Reihe (i) gemeinsam mit den hauptströmungszugewandten Kanten der Basen der hinteren Reihe (i+1) jeweils schräg gegenüber der Umfangsrichtung verlaufen, um eine feste relative Position zwischen den Schaufeln der Reihe (i) und der Reihe (i+1) sicherzustellen. Es ist dabei günstig, wenn jede weite Schaufel einer Reihe (i) bzw. (i+1) dieselbe Schaufelfußgeometrie besitzt.

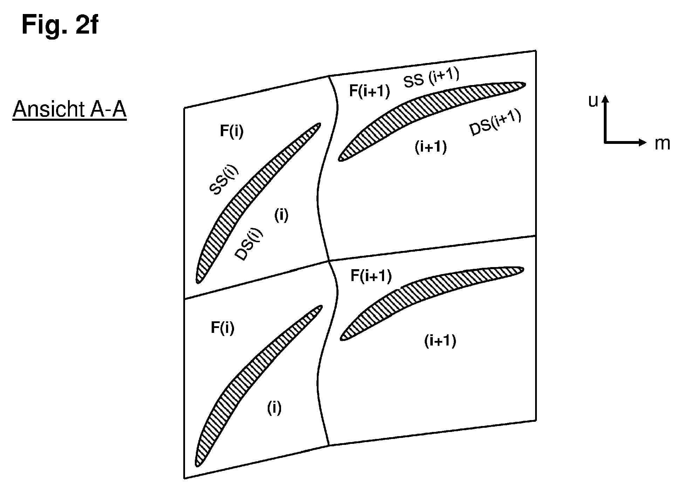

Die Fig. 2f zeigt eine erfindungsgemäße Anordnung, bei der die hauptströmungsabgewandten Kanten der Basen der vorderen Reihe (i) gemeinsam mit den hauptströmungszugewandten Kanten der Basen der hinteren Reihe (i+1) jeweils konturiert und mit variierender Axialposition in Umfangsrichtung verlaufen, um eine feste relative Position zwischen den Schaufeln der Reihe (i) und der Reihe (i+1) sicherzustellen. Besonders vorteilhaft ist ein geschwungener Verlauf. Es ist dabei günstig, wenn jede Schaufel einer Reihe (i) bzw. (i+1) dieselbe Schaufelfußgeometrie besitzt.

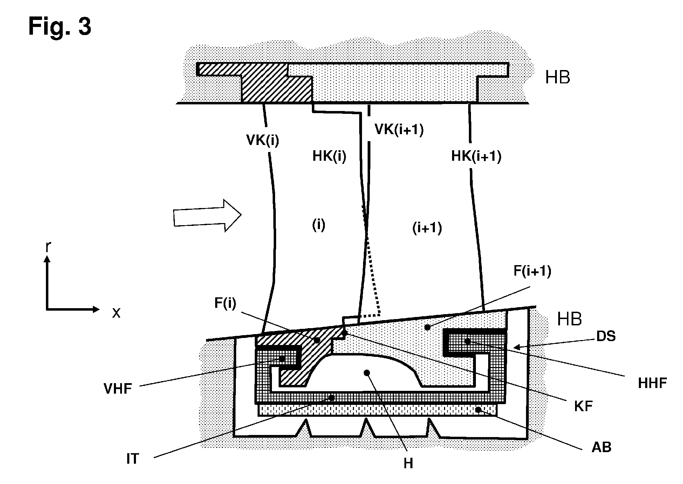

Die Fig. 3 zeigt, ähnlich wie die Fig. 2a, in einer durch die Axialrichtung x und die Radialrichtung r gebildeten Meridionalebene eine erfindungsgemäße Statorschaufelreihengruppe bestehend aus zwei direkt benachbarten Statorschaufelreihen (i) und (i+1).

Im Bereich des inneren festen Schaufelendes sind die den Mitgliedschaufelreihen zugehörigen Schaufelprofile auf einer Basis F(i), F(i+1) vorgesehen. In wenigstens einer durch die Axialrichtung x und die Radialrichtung r gebildeten Meridionalebene grenzen die Basen F(i), F(i+1) zweier benachbarter Mitgliedschaufelreihen (i) und (i+1) in wenigstens einem Punkt an der Hauptströmungspfadberandung aneinander.

Dabei kann vorgesehen sein, wie in der Fig. 3 dargestellt, dass zwei benachbarte Mitgliedschaufelreihen (i) und (i+1) entlang einer von der Hauptströmungspfadberandung ausgehenden und mit einem Absatz versehenen Kontaktfläche KF aneinandergrenzen, sodass ein gegenseitiger Sitz zwischen den Reihen (i) und (i+1) gegeben ist.

Die Deckbandkonstruktion DS wird auch in der Fig. 3 durch die Basen F(i), F(i+1) der Mitgliedschaufelreihen (i) und (i+1) und den Innenträger IT gebildet.

Beispielhaft für diese Deckbandkonstruktion DS gezeigt, aber erfindungsgemäß anwendbar für alle anderen zuvor oder nachstehend beschriebenen Deckbandkonstruktionen, sind die Dimensionen der Schaufeln und der Basen so gewählt, dass ein Teil des Schaufelprofils der Reihe (i) über die eigene Basis F(i) hinaussteht und auf die Basis F(i+1) einer Schaufel der Reihe (i+1) ragt.

Wie auch in Fig. 2a bilden die Basis F(i) der Reihe (i), die Basis (F)i+1) der Reihe (i+1) und der Innenträger IT gemeinsam einen im Wesentlichen geschlossenen Hohlraum H innerhalb der Deckbandkonstruktion DS aus.

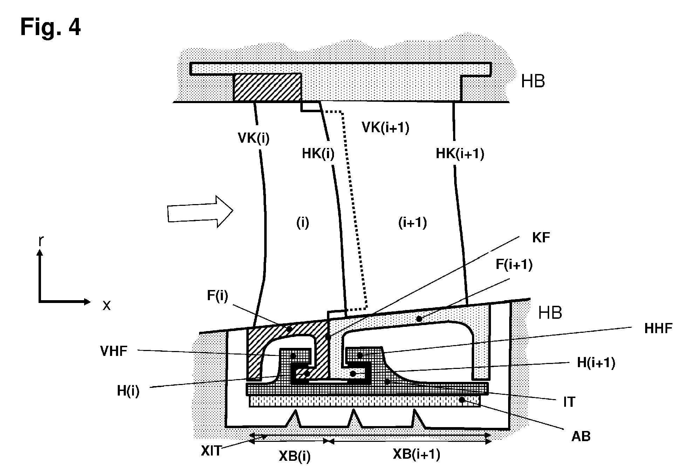

Auch die Fig. 4 zeigt in einer durch die Axialrichtung x und die Radialrichtung r gebildeten Meridionalebene eine erfindungsgemäße Statorschaufelreihengruppe bestehend aus zwei direkt benachbarten Statorschaufelreihen. Die beiden dargestellten Schaufelreihenmitglieder (i) und (i+1) besitzen an beiden Schaufelenden eine feste Verbindung zu der die Hauptströmungspfadberandung bildenden Struktur.

Im Bereich des inneren festen Schaufelendes sind die den Mitgliedschaufelreihen zugehörigen Schaufelprofile auf einer Basis F(i), F(i+1) vorgesehen. Die hauptströmungsabgewandte Seite der Reihe (i) und die hauptströmungszugewandte Seite der Reihe (i+1) liegen entlang einer ebenen absatzlosen Kontaktfläche KF aneinander. Der Innenträger IT wird gemeinsam von den Basen F(i), F(i+1) der Reihen (i) und (i+1) gehalten und sichert den Zusammenhalt der beiden Basen entlang der Kontaktfläche KF.

Die Basis F(i) der Reihe (i) besitzt einen Haltefinger H(i), der im Wesentlichen stromaufwärts gerichtet ist und axial stromab der Vorderkante VK(i) vorgesehen ist. Die Basis F(i+1) der Reihe (i+1) besitzt einen Haltefinger H(i+1), der im Wesentlichen stromabwärts gerichtet ist und axial stromauf der Hinterkante HK(i+1) vorgesehen ist. Die Haltefinger H(i) und H(i+1) sind in jeweils einer Ausnehmung im Innenträger IT verankert vorgesehen. Die Haltefinger H(i), H(i+1) und zugehörigen Ausnehmungen sind dadurch gekennzeichnet, dass aufgrund ihrer Formgebung der Innenträger IT sowohl in der Mitgliedschaufelreihe (i) als auch in der Mitgliedschaufelreihe (i+1) in wenigstens einer Richtung fixiert ist. Die Haltefinger H(i), H(i+1) und zugehörigen Ausnehmungen können erfindungsgemäß im Wesentlichen rechtwinklig (wie hier dargestellt) oder alternativ auch im Wesentlichen halbschwalbenschwanzartig oder schwalbenschwanzartig oder dreieckig oder keilartig geformt sein.

Auch in der hier dargestellten Variante ist es vorteilhaft sein, wenn sich der Innenträger IT in Hauptströmungsrichtung betrachtet über beide Basen in der Mitgliedschaufelreihe der Mitgliedschaufelreihen (i) und (i+1) erstreckt und es gilt:

$$0{,}75 < \text{XIT} / (\text{XB(i)} + \text{XB(i+1)}) < 1{,}1.$$

Die Basen F(i), F(i+1) der Reihen (i) und (i+1) sowie der Innenträger IT sind so beschaffen, dass der Innenträger IT gemeinsam mit jeweils einer Basis F(i), F(i+1) einen im wesentlichen geschlossenen Hohlraum (insgesamt 2 Hohlräume) innerhalb der Deckbandkonstruktion bildet.

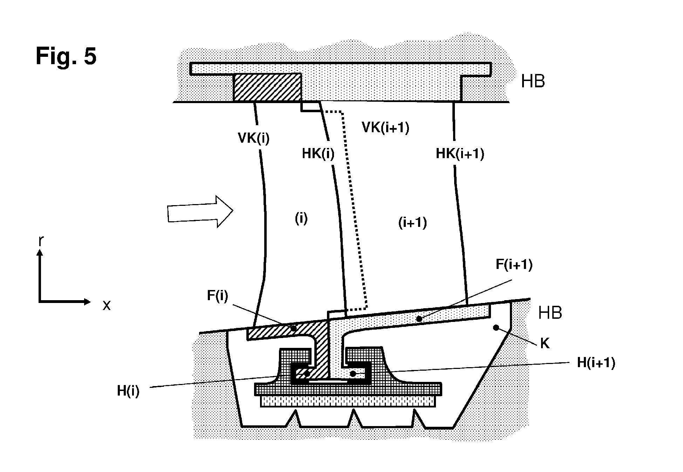

Die Fig. 5 zeigt eine ähnliche Deckbandkonstruktion wie die Fig. 4; hier sind jedoch die zwischen dem Innenträger IT und den Basen F(i), F(i+1) gebildeten Räume zur Kavität K hin offen.

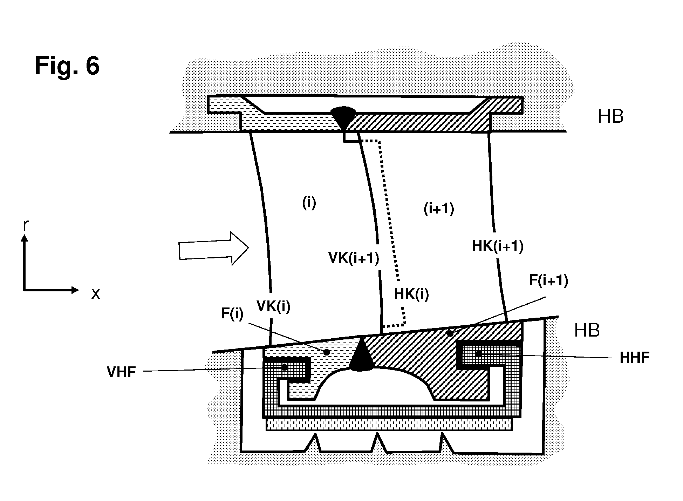

Die Fig. 6 zeigt eine ähnliche Deckbandkonstruktion wie die Fig. 2a; hier sind jedoch die Basen F(i), F(i+1) der Reihen (i) und (i+1) an der Kontaktfläche KF nicht lose aneinandergrenzend, sondern mit Hilfe einer Schweiß- oder Lötverbindung miteinander verbunden.

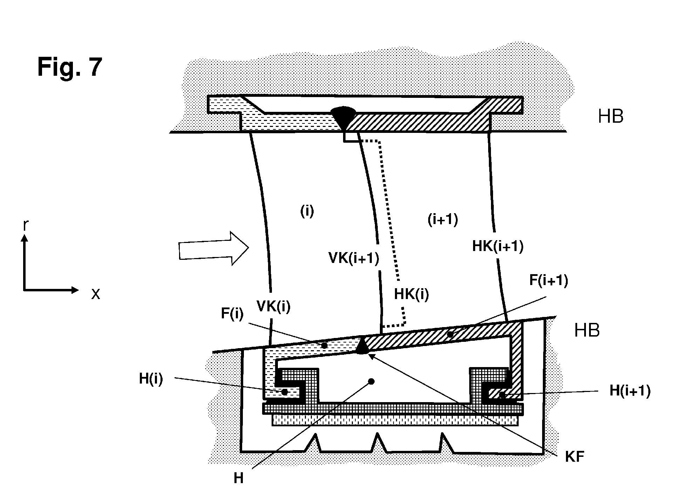

Die Fig. 7 zeigt eine ähnliche Deckbandkonstruktion wie die Fig. 6. Die hauptströmungsabgewandte Seite der Basis F(i) der Reihe (i) und die hauptströmungszugewandte Seite der Basis F(i+1) der Reihe (i+1) liegen entlang einer ebenen absatzlosen Kontaktfläche KF aneinander und sind mit Hilfe einer Schweiß- oder Lötverbindung verbunden. Der Innenträger IT wird gemeinsam von den Basen der Reihen (i) und (i+1) gehalten.

Die Basis F(i) der Reihe (i) besitzt einen Haltefinger H(i), der im Wesentlichen stromabwärts gerichtet ist und in Hauptströmungsrichtung bzw. Axialrichtung be-

**EP 2 921 714 A1**

trachtet im Bereich nahe der Vorderkante VK(i) vorgesehen ist. Die Basis F(i+1) der Reihe (i+1) besitzt einen Haltefinger H(i+1), der im Wesentlichen stromaufwärts gerichtet ist und in Hauptströmungsrichtung bzw. Axialrichtung betrachtet im Bereich nahe der Hinterkante HK(i+1) vorgesehen ist. Die Haltefinger H(i) und H(i+1) sind in jeweils einer Ausnehmung im Innenträger IT verankert und weisen zueinander. Die Haltefinger und Ausnehmungen sind dadurch gekennzeichnet, dass aufgrund ihrer Formgebung der Innenträger IT sowohl in der Mitgliedschaufelreihe (i) als auch in der Mitgliedschaufelreihe (i+1) in wenigstens einer Richtung fixiert ist. Die Haltefinger und Ausnehmungen können erfindungsgemäß im Wesentlichen rechtwinklig (wie hier dargestellt) oder alternativ auch im Wesentlichen halbschwalbenschwanzartig oder schwalbenschwanzartig oder dreieckig oder keilartig geformt sein.

Auch in der Variante der Fig. 7 kann es vorteilhaft sein, wenn sich der Innenträger IT in Hauptströmungsrichtung betrachtet über beide Basen der Mitgliedschaufelreihen (i) und (i+1) erstreckt und es gilt:

$$0{,}75 < XIT / (XB(i) + XB(i+1)) < 1{,}1.$$

Die Basen F(i), F(i+1) der Reihen (i) und (i+1) sowie der Innenträger IT sind so beschaffen, dass der Innenträger IT gemeinsam mit den beiden Basen F(i), F(i+1) einen im wesentlichen geschlossenen Hohlraum H innerhalb der Deckbandkonstruktion bildet.

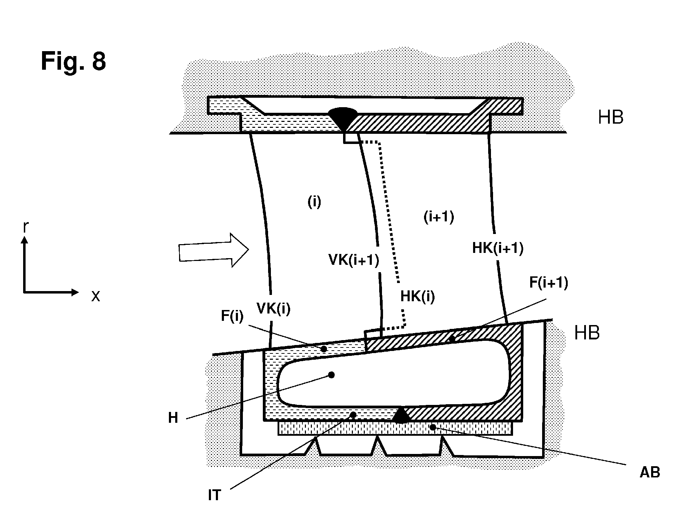

Die Fig. 8 zeigt eine ähnliche Deckbandkonstruktion wie die Fig. 7. Hier sind jedoch die Basen F(i), F(i+1) der Reihen (i) und (i+1) und der Innenträger IT baulich integriert, so dass wenigstens eine der Basen F(i), F(i+1) mit wenigstens einem Teil des Innenträgers IT ein gemeinsames Bauteil bildet.

Dabei ist in der Ausgestaltung der Fig. 8 vorgesehen, dass die Basen F(i), F(i+1) der Reihen (i) und (i+1) jeweils mit einem Teil des Innenträgers IT baulich integriert sind. Die beiden Teile des Innenträgers IT können z.B. über eine Schweiß- oder Lötverbindung miteinander verbunden sein. Zusätzlich oder alternativ können auch die Basen F(i), F(i+1) über eine Schweiß- oder Lötverbindung miteinander verbunden sein. Weiter kann es vorteilhaft sein, wenn eine gemeinsame radial einwärts weisende Fläche gebildet wird, auf der ggf. ein Anstreifbelag oder eine Anordnung von Dichtspitzen appliziert sein kann.

Es kann ebenfalls vorgesehen sein, dass im Wesentlichen die Basis F(i) der vorderen Reihe (i) mit dem Innenträgers IT baulich integriert ist. Dabei kann es vorgesehen sein, dass von der Reihe (i) ausgehend eine radial einwärts weisende Fläche gebildet wird, auf der ggf. ein Anstreifbelag oder eine Anordnung von Dichtspitzen appliziert sein kann.

Es kann ebenfalls vorgesehen sein, dass im Wesentlichen die Basis F(i+1) der hinteren Reihe (i+1) mit dem Innenträgers IT baulich integriert ist. Dabei kann es vorteilhaft sein, dass von der Reihe (i+1) ausgehend eine radial einwärts weisende Fläche gebildet wird, auf der ggf. ein Anstreifbelag oder eine Anordnung von Dichtspitzen appliziert sein kann.

Es kann weiter vorgesehen sein, dass durch eine der oben beschriebenen Bauweisen ein im wesentlichen geschlossener Hohlraum H in der Deckbandkonstruktion geschaffen ist. Dabei kann es vorteilhaft sein, wenn der Hohlraum H über wenigstens 75% der gemeinsamen axialen Erstreckung der Basen F(i), F(i+1) vorgesehen ist.

Weiterhin kann vorgesehen sein, dass die Basen F(i), F(i+1) der Reihen (i) und (i+1) an der radial einwärts weisenden Fläche (Unterseite) miteinander mittels eines Schweiß- oder Lötverfahrens verbunden sind (wie in Fig. 8 dargestellt).

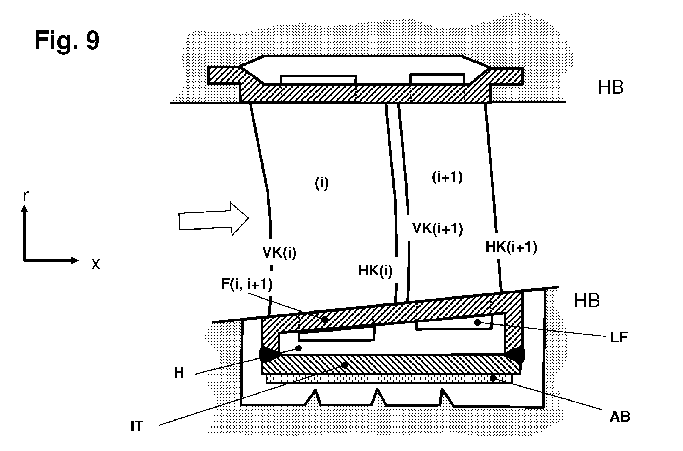

Die Fig. 9 zeigt eine ähnliche Deckbandkonstruktion wie die Fig. 8. Hier sind jedoch die Basen der Reihen (i) und (i+1) miteinander baulich integriert (integrale einteilige Bauweise) und bilden eine gemeinsame Gesamtbasis F(i, i+1). Dabei kann es vorgesehen sein, dass an einer der beiden oder an beiden Mitgliedschaufelreihen die Schaufelprofile (i, i+1) separat von der Basis F(i, i+1) angefertigt sind und mit Hilfe von laschenartigen Fortsätzen LF, die im Wesentlichen als Verlängerung des Profils über die Hauptströmungspfadberandungen HB hinaus und in die Basis F(i, i+1) hinein reichen, befestigt werden. Gegebenenfalls stellt ein Fügeprozess den Formschluss zwischen Laschen LF und Basis F(i, i+1) her.

Die Basis F(i, i+1) ist bei der Fig. 9 an zwei Positionen mittels eines Löt- oder Schweißverfahrens mit dem Innenträger IT verbunden. Dabei kann es vorteilhaft sein, wenn wenigstens eines der Bauteile Basis F(i, i+1) und Innenträger IT in der Meridionalansicht (x-r) einen im Wesentlichen U-förmigen Querschnitt besitzt.

Weiter kann es vorteilhaft sein, wenn beide Bauteile Basis F(i, i+1) und Innenträger IT in der Meridionalansicht (x-r) einen im Wesentlichen U-förmigen Querschnitt besitzen. Es kann weiterhin vorteilhaft sein, wenn eines der Bauteile Basis F(i, i+1) und Innenträger IT in der Meridionalansicht (x-r) einen im Wesentlichen rechteckigen Querschnitt besitzt.

Weiter kann vorgesehen sein, wenn eines der Bauteile Basis F(i, i+1) und Innenträger IT in der Meridionalansicht (x-r) einen im Wesentlichen U-förmigen Querschnitt und das andere Bauteil (Basis F(i, i+1) oder Innenträger IT) in der Meridionalansicht (x-r) einen im Wesentlichen rechteckigen Querschnitt besitzt.

Es kann weiter vorgesehen sein, dass die Basis F(i, i+1) und der Innenträger IT an der axial stromaufweisenden Fläche (Frontseite) axial im Bereich der Vorderkante VK(i) und an der axial stromabweisenden Fläche (Rückseite) axial im Bereich der Hinterkante HK(i+1) miteinander mittels einer Schweiß- oder Lötverbindung miteinander verbunden sind.

Die Basis F(i, i+1) und der Innenträger IT sind in der Fig. 9 so beschaffen, dass der Innenträger IT gemeinsam mit der Basis F(i, i+1) einen im wesentlichen geschlossenen Hohlraum H innerhalb der Deckbandkonstruktion bildet.

Es kann vorgesehen sein, dass durch den Innenträger IT die radial einwärts weisende Fläche (Außenfläche) gebildet wird, auf der ggf. ein Anstreifbelag AB oder eine Anordnung von Dichtspitzen appliziert ist.

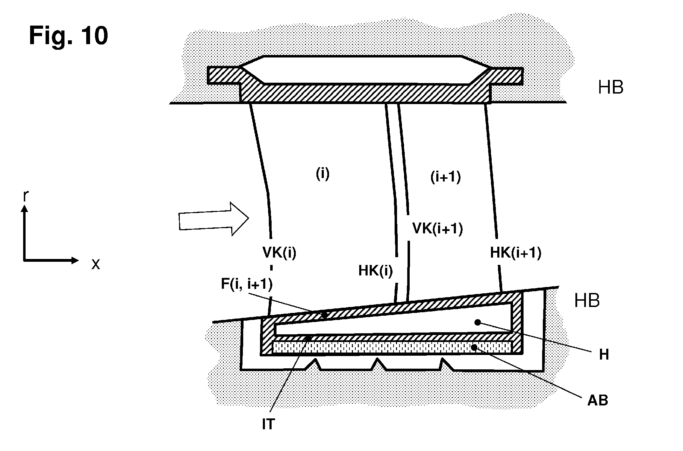

Die Fig. 10 zeigt eine ähnliche Deckbandkonstruktion wie die Fig. 9. Hier sind jedoch die Gesamtbasis (F(i, i+1) der Reihen (i) und (i+1) und der Innenträger IT miteinander baulich integriert (integrale einteilige Bauweise). Auch hier ist an der Deckbandkonstruktion eine radial einwärts weisende Fläche ausgebildet, auf der ggf. ein Anstreifbelag AB oder eine Anordnung von Dichtspitzen appliziert sein kann.

Es kann vorgesehen sein, dass ein im Wesentlichen geschlossener Hohlraum H innerhalb der Deckbandkonstruktion vorgesehen ist.

Es ist kann weiter vorgesehen sein, dass die Basis F(i), F(i+1) mindestens jeweils einer Schaufel der Reihen (i) und (i+1) und der Innenträger IT als integrales Bauteil gefertigt sind. Hierzu kann ein lasergestütztes Fertigungsverfahren vorgesehen sein, wie es durch Lasersintering, Laserprinting, Direct Laser Depositioning oder verwandte Verfahren gegeben ist. Alternativ kann auch ein Gieß- oder Einspitzgießverfahren vorgesehen sein.

Weiter kann vorgesehen sein, dass auf der radial einwärts weisenden Fläche der Deckbandkonstruktion ein Anstreifbelag AB vorgesehen ist und dieser ebenfalls dem integralen Bauteil zugehört und entsprechend in einem einheitlichen lasergestützten Fertigungsprozess gemeinsam mit mindestens jeweils einer Schaufel der Reihen (i) und (i+1) und dem Innenträger hergestellt ist.

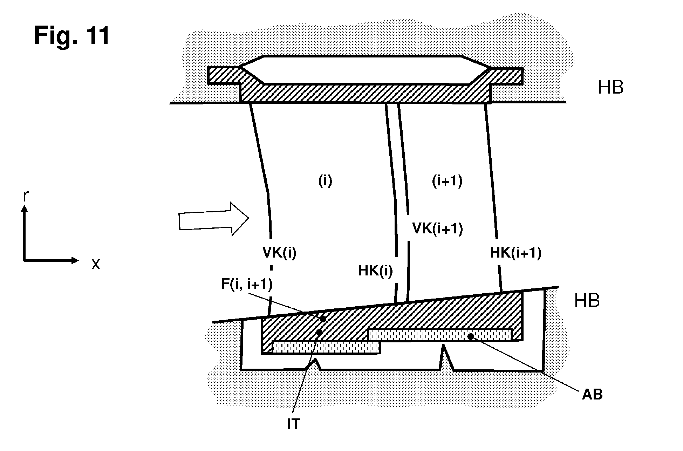

Die Fig. 11 zeigt eine ähnliche Deckbandkonstruktion wie die Fig. 10. Hier sind die Basen der Reihen (i) und (i+1) sowie der Innenträger IT miteinander ohne Ausbildung eines Hohlraumes zu einem Gesamtteil baulich integriert (integrale einteilige Bauweise). Auch hier ist an der Deckbandkonstruktion eine radial einwärts weisende Fläche ausgebildet, auf der ggf. ein Anstreifbelag AB oder eine Anordnung von Dichtspitzen appliziert sein kann.

Dabei kann vorgesehen sein, dass die einwärts weisende Oberfläche wenigstens eine Abstufung aufweist. Dies gilt für alle im voranstehenden beschriebenen Konfigurationen.

Es kann des Weiteren vorgesehen sein, dass zwischen verschiedenen Bauteilen, beispielsweise einer Basis und einem Innenträger Verschleißschutzhülsen eingesetzt sind, die von dünner Wandstärke sind und die den Aufbau der Konstruktion nicht konzeptionell verändern. Der Begriff des Aneinandergrenzens oder Berührens einer Schaufelfußkonstruktion und der umgebenden Struktur wie im Voranstehenden beschrieben soll folglich auch für den Umstand des Aneinandergrenzen bzw. Berührens über eine zwischenliegende Verschleißschutzhülse gelten.

Die vorliegende Erfindung beschränkt sich in ihrer Ausgestaltung nicht auf die dargestellten Ausführungsbeispiele. So können die Prinzipien der vorliegenden Erfindung beispielsweise in entsprechender Weise auf Rotor-Schaufelreihen und die Fixierung der radial äußeren Schaufelenden von Rotorschaufeln an Deckbandkonstruktionen im Bereich der äußeren Hauptströmungspfadberandung angewandt werden.

**Patentansprüche**

1. Schaufelreihengruppe anordbar in einem Hauptströmungspfad einer Strömungsmaschine und bestehend aus N benachbarten und sowohl in Axialrichtung (x) als auch in Umfangsrichtung relativ zueinander fest angeordneten Mitgliedsschaufelreihen, wobei die Anzahl N der Mitgliedsschaufelreihen größer gleich 2 ist und (i) den Laufindex mit Werten zwischen 1 und N kennzeichnet, wobei in der durch die Axialrichtung (x) und die Radialrichtung (r) gebildeten Meridionalebene eine vordere Mitgliedsschaufelreihe mit vorderen Schaufeln (i) sowie eine hintere Mitgliedsschaufelreihe mit hinteren Schaufeln (i+1) gegeben sind, wobei die Schaufelreihengruppe zwei Hauptströmungspfadberandungen (HB) aufweist, **dadurch gekennzeichnet,** **dass** die Schaufeln (i, i+1) der Mitgliedsschaufelreihen an der einen Hauptströmungspfadberandung in der umgebenden Struktur mittels einer Schaufelfußkonstruktion fixiert sind und dass die Schaufeln (i, i+1) der Mitgliedschaufelreihen an der anderen Hauptströmungspfadberandung (HB) jeweils mit einer Basis ((F(i), F(i+1)) fest verbunden sind, wobei eine vordere Basis (F(i) einer Schaufel (i) einer vorderen Mitgliedschaufelreihe und eine dazu benachbarte hintere Basis (F(i+1) einer Schaufel (i+1) einer hinteren Mitgliedschaufelreihe Bestandteil einer in eine Kavität (K) der anderen Hauptströmungspfadberandung (HB) eingebetteten Deckbandkonstruktion (DS) sind, und ein weiterer Bestandteil der Deckbandkonstruktion (DS) ein Träger (IT) ist, der mit wenigstens eine dieser Basen ((F(i), F(i+1)) mit Hilfe einer formschlüssigen oder werkstoffbasierten Verbindung verbunden oder einstückig mit diesen ausgebildet ist, wobei der Träger (IT) eine dem Hauptströmungspfad abgewandte Oberfläche (OF) aufweist, die geeignet ist, einer angrenzenden Oberfläche einer Strömungsmaschine gegenüberzustehen.

2. Schaufelreihengruppe nach Anspruch 1, **dadurch gekennzeichnet, dass** die stromabwärts gewandte Seite der Basis (F(i)) der vorderen Mitgliedschaufelreihe und die stromaufwärts gewandte Seite der Basis (F(i+1)) der hinteren Mitgliedschaufelreihe entlang einer mit einem in radialer Richtung vorgesehenen Absatz versehenen Kontaktfläche (KF) aneinander liegen, sodass ein gegenseitiger Sitz zwischen den Basen ((F(i), F(i+1)) der Mitgliedschaufelreihen und gegeben ist.

3. Schaufelreihengruppe nach Anspruch 1 oder 2, **dadurch gekennzeichnet, dass** eine modulare Bauweise der Basen ((F(i), F(i+1)) vorgesehen ist, wobei der Träger (IT) mit den Basen ((F(i), F(i+1)) der vorderen und hinteren Mitgliedschaufelreihen verbunden ist und den Zusammenhalt der beiden Basen ((F(i), F(i+1)) sichert, wobei der Träger (IT) jeweils eine in der Basis der Mitgliedschaufelreihen verankerte Haltestruktur, nämlich eine vordere Haltestruktur (VHF) verankert in der Basis der vorderen Mitgliedschaufelreihe und eine hintere Haltestruktur (HHF) verankert in der Basis der hinteren Mitgliedschaufelreihe aufweist, wobei jeder der Haltestrukturen (VHF, HHF) aufgrund ihrer Formgebung den Träger (IT) in der Mitgliedschaufelreihe in wenigstens einer Richtung fixiert.

4. Schaufelreihengruppe nach Anspruch 3, **dadurch gekennzeichnet, dass** die beiden Haltestrukturen (VHF, HHF) aufeinander zu weisen und auf diese Weise die Basen der Mitgliedschaufelreihen in Axialrichtung zusammenhalten.

5. Schaufelreihengruppe nach Anspruch 1 oder 2, **dadurch gekennzeichnet, dass** an der Basis (F(i) der vorderen Mitgliedschaufelreihe eine Haltestruktur (H(i)) vorgesehen ist, die im Wesentlichen stromaufwärts gerichtet und axial stromab der Schaufelvorderkante der vorderen Mitgliedschaufelreihe vorgesehen ist, und an der Basis (F(i+1) der hinteren Mitgliedschaufelreihe eine Haltestruktur H(i+1) vorgesehen ist, die im Wesentlichen stromabwärts gerichtet und axial stromauf der Schaufelhinterkante der hinteren Mitgliedschaufelreihe vorgesehen ist, wobei die Haltestrukturen (H(i), H(i+1)) in jeweils einer Ausnehmung im Träger (IT) verankert sind, wobei durch die Formgebung der Haltestrukturen und Ausnehmungen der Träger (IT) sowohl in der vorderen als auch in der hinteren Mitgliedschaufelreihe in wenigstens einer Richtung fixiert ist.

6. Schaufelreihengruppe nach Anspruch 1 oder 2, **dadurch gekennzeichnet, dass** die stromabwärts gewandte Seite der Basis (F(i)) der vorderen Mitgliedschaufelreihe und die stromaufwärts gewandte Seite der Basis (F(i+1)) der hinteren Mitgliedschaufelreihe aneinander liegen und an einer Kontaktfläche (KF) im Bereich der inneren Hauptströmungspfadberandung mit Hilfe eines Schweiß- oder Lötverfahrens verbunden sind.

7. Schaufelreihengruppe nach einem der vorangehenden Ansprüche, **dadurch gekennzeichnet, dass** der Träger (IT) in Hauptströmungsrichtung betrachtet im Bereich beider Basen ((F(i), F(i+1)) der Mitgliedschaufelreihen und dabei entlang einer sich in axialer Richtung erstreckenden Strecke ausgebildet ist, wobei bei Betrachtung in einer Meridionalebene (x, r) zwei orthogonal zur Axialrichtung von vorne und hinten an den Träger (IT) angelegte Tangenten einen Abstand XIT haben, zwei orthogonal zur Axialrichtung von vorne und hinten an die Basis ((F(i)) der vorderen Mitgliedschaufelreihe angelegte Tangenten einen Abstand XB(i) haben, und zwei orthogonal zur Axialrichtung von vorne und hinten an die Basis (F)i+1)) der hinteren Mitgliedschaufelreihe angelegte Tangenten einen Abstand XB(i+1) haben, wobei die Abstände XIT, XB(i) und XB(i+1) sich gemäß der Beziehung 0,75 < XIT / (XB(i) + XB(i+1) < 1,1 verhalten.

8. Schaufelreihengruppe nach einem der vorangehenden Ansprüche, **dadurch gekennzeichnet, dass** die Basen ((F(i), F(i+1)) der Mitgliedschaufelreihen in einer Meridionalebene (x, r) gemeinsam von einem Träger (IT) mit einem im Wesentlichen klammerförmigen Querschnitt umfasst werden.

9. Schaufelreihengruppe nach Anspruch 1 oder 2, **dadurch gekennzeichnet, dass** wenigstens eine der Basen ((F(i), F(i+1)) der Mitgliedschaufelreihen mit wenigstens einem Teil des Trägers (IT) ein gemeinsames Bauteil bildet.

10. Schaufelreihengruppe nach Anspruch 1 oder 2, **dadurch gekennzeichnet, dass** die Basen ((F(i), F(i+1)) der benachbarten Mitgliedschaufelreihen miteinander baulich integriert sind und eine einheitliche Gesamtbasis (F(i+1) bilden.

11. Schaufelreihengruppe nach Anspruch 1 oder 2, **dadurch gekennzeichnet, dass** die Basen ((F(i), F(i+1)) der Mitgliedschaufelreihen sowie der Träger (IT) miteinander baulich integriert als Einheit ausgebildet sind.

12. Schaufelreihengruppe nach Anspruch 11, **dadurch gekennzeichnet, dass** auf der vom Hauptströmungspfad abgewandten Oberfläche des Trägers (IT) ein Anstreifbelag (AB) vorgesehen ist und dieser ebenfalls dem integralen Bauteil zugehört.

13. Schaufelreihengruppe nach einem der vorangehenden Ansprüche, **dadurch gekennzeichnet, dass** in einer Meridionalebene (x, r) die Basis ((F(i)) der vorderen Mitgliedschaufelreihe, die Basis (F(i+1)) der hinteren Mitgliedschaufelreihe und der Träger (IT) gemeinsam einen im Wesentlichen geschlossenen Hohlraum innerhalb der Deckbandkonstruktion (DS) ausbilden und umgeben.

**14.** Schaufelreihengruppe nach einem der vorangehenden Ansprüche, **dadurch gekennzeichnet, dass** die dem Hauptströmungspfad abgewandte Oberfläche des Trägers (IT) in radialer Richtung wenigstens eine Abstufung aufweist.

**15.** Schaufelreihengruppe nach einem der vorangehenden Ansprüche, **dadurch gekennzeichnet, dass** die Basen ((F(i), F(i+1)) zweier benachbarter Mitgliedschaufelreihen an der Hauptströmungspfadberandung (HB) eine im gesamten Bereich der Mitgliedschaufelreihen geschlossene und vom Hauptfluidstrom benetzte Oberfläche bilden.

**Fig. 1**

# Fig. 2a

# Fig. 2b

Ansicht A-A

F(i)

SS(i)

(i)

DS(i)

F(i)

(i)

F(i+1)

SS (i+1)

DS(i+1)

(i+1)

F(i+1)

(i+1)

u

m

**Fig. 2c**

Ansicht A-A

# Fig. 2d

Ansicht A-A

# Fig. 2e

<u>Ansicht A-A</u>

SS (i+1)

F(i)

SS(i)

DS(i+1)

(i+1)

DS(i)

(i)

F(i+1)

u

m

F(i)

F(i+1)

(i)

(i+1)

# Fig. 2f

Ansicht A-A

**Fig. 3**

# Fig. 4

HB

VK(i)

VK(i+1)

HK(i)

HK(i+1)

(i)

(i+1)

KF

F(i+1)

r

F(i)

HB

x

HHF

VHF

H(i+1)

H(i)

IT

AB

XIT

XB(i)

XB(i+1)

**Fig. 5**

HB

VK(i)

VK(i+1)

HK(i)

HK(i+1)

r

x

(i)

(i+1)

F(i)

F(i+1)

HB

K

H(i)

H(i+1)

**Fig. 6**

# Fig. 7

HB

r

x

(i)

(i+1)

HK(i+1)

VK(i+1)

HK(i)

F(i+1)

F(i)   VK(i)

HB

H(i)

H(i+1)

KF

H

## Fig. 8

HB

(i)

(i+1)

r

x

VK(i+1)

HK(i+1)

HK(i)

F(i+1)

F(i)  VK(i)

HB

H

AB

IT

Fig. 9

**Fig. 10**

HB

HB

(i)  (i+1)

r

x

VK(i+1)

VK(i)

HK(i+1)

HK(i)

F(i, i+1)

H

AB

IT

**Fig. 11**

HB

HB

r

x

(i)

(i+1)

VK(i+1)

VK(i)

HK(i)

HK(i+1)

F(i, i+1)

AB

IT

Europäisches Patentamt
European Patent Office
Office européen des brevets

# EUROPÄISCHER RECHERCHENBERICHT

**Nummer der Anmeldung**

EP 15 15 7763

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2013/039753 A1 (IKEGUCHI TAKUYA [JP] ET AL) 14. Februar 2013 (2013-02-14) | 1-3 | INV. F04D29/54 F01D5/14 F01D9/04 F01D25/24 F04D29/64 |
| A | * Abbildung 4 * | 4-15 | |
| X,D | EP 2 261 463 A2 (ROLLS ROYCE DEUTSCHLAND [DE]) 15. Dezember 2010 (2010-12-15) * Abbildungen 1-3 * | 1 | |
| A,P | EP 2 833 001 A1 (MITSUBISHI HITACHI POWER SYS [JP]) 4. Februar 2015 (2015-02-04) * Abbildungen 20A,20B * * Anspruch 1 * | 1-15 | |

**RECHERCHIERTE SACHGEBIETE (IPC)**

F04D
F01D

Der vorliegende Recherchenbericht wurde für alle Patentansprüche erstellt

| Recherchenort | Abschlußdatum der Recherche | Prüfer |
|---|---|---|
| Den Haag | 30. Juli 2015 | Ingelbrecht, Peter |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**     EP 15 15 7763

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-07-2015

| Im Recherchenbericht angeführtes Patentdokument | Datum der Veröffentlichung | Mitglied(er) der Patentfamilie | Datum der Veröffentlichung |
|---|---|---|---|
| US 2013039753 A1 | 14-02-2013 | CA 2792789 A1<br>EP 2549121 A1<br>JP 5192507 B2<br>JP 2011196254 A<br>US 2013039753 A1<br>WO 2011114744 A1 | 22-09-2011<br>23-01-2013<br>08-05-2013<br>06-10-2011<br>14-02-2013<br>22-09-2011 |
| EP 2261463 A2 | 15-12-2010 | DE 102009023100 A1<br>EP 2261463 A2<br>US 2010303629 A1 | 02-12-2010<br>15-12-2010<br>02-12-2010 |
| EP 2833001 A1 | 04-02-2015 | CN 104343471 A<br>EP 2833001 A1<br>JP 2015025428 A<br>US 2015027131 A1 | 11-02-2015<br>04-02-2015<br>05-02-2015<br>29-01-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 2261463 A2